# EUROPÄISCHE PATENTSCHRIFT

(11) **EP 2 810 754 B1**
(45) Veröffentlichungstag und Bekanntmachung des Hinweises auf die Patenterteilung: **09.10.2019**
(21) Anmeldenummer: 14164910.3
(22) Anmeldetag: 16.04.2014
(51) Int. Cl.: B27B 29/00, B27B 29/02, B27B 31/06

(54) **Verfahren und Vorrichtung zum Bearbeiten eines Baumstammes**
Method and apparatus for processing a tree trunk
Procédé et dispositif destiné au traitement d'un tronc d'arbre

(30) Priorität: 21.05.2013 AT 503402013
(43) Veröffentlichungstag der Anmeldung: 10.12.2014
(73) Patentinhaber: Springer Maschinenfabrik GmbH, 9360 Friesach (AT)
(72) Erfinder: Häupl, Friedrich, 4880 St. Georgen im Attergau (AT)
(74) Vertreter: Hübscher & Partner Patentanwälte GmbH

(56) Entgegenhaltungen:
- US-A- 4 104 944
- US-A- 4 262 572
- US-A- 5 109 899
- US-A- 5 135 037
- US-A- 5 806 401

## Beschreibung

Die Erfindung bezieht sich auf ein Verfahren nach dem Oberbegriff des Anspruchs 1 und auf eine Vorrichtung nach dem Oberbegriff des Anspruchs 4. Die Erfindung bezieht sich auf ein Verfahren zum Bearbeiten eines Baumstammes, der nach einem Ausrichten bezüglich einer Längsachse mit Hilfe wenigstens einem Werkzeug zu einem Holzblock profiliert und anschließend zu Schnittholz zersägt wird.

Um beim Verarbeiten von Baumstämmen zu Brettern eine gute Holzausnutzung durch geringen Verschnitt zu gewährleisten, ist es bekannt (AT 387745 B), die Baumstämme vor der Verarbeitung auf einem Längsförderer hinsichtlich ihrer Längsachse auszurichten. Dies kann beispielsweise mit Hilfe von beidseits des Längsförderers drehbar gelagerten und einander paarweise gegenüberliegenden Richtarmen erfolgen. Darüber hinaus ist es aus der AT 365505 B bekannt, Baumstämme vor der Verarbeitung zu Brettern zu einem Holzblock zu profilieren, der als Ausgangswerkstück für das Sägen der Bretter dient. Die ausgerichteten Baumstämme bzw. die profilierten Holzblöcke werden nach einer derartigen Vorbereitung über einen Längsförderer einer Bandsäge zugeführt und zu Brettern verarbeitet.

Nachteilig bei diesen bekannten Verfahren ist allerdings, dass für die Baumstämme zum Durchlaufen der einzelnen Bearbeitungsstationen aufwendige und störungsanfällige Verarbeitungsstraßen vorgesehen werden müssen, wobei durch den Transport der Baumstämme in Längsrichtung ein Umspannen zwischen den einzelnen Bearbeitungsstationen erforderlich wird, was die Verarbeitungsgenauigkeit beeinträchtigt. Außerdem ist aufgrund der in Längsrichtung der Baumstämme aufeinanderfolgenden Bearbeitungsstationen ein erheblicher Platzbedarf gegeben.

Sägemühlen mit einem Schlitten für den zu verarbeitenden Baumstamm, der zum Zersägen in Längsrichtung an Bandsägen vorbeigeführt wird, sind beispielsweise aus der US 5806401 A bekannt. Die Verlagerung des Baumstammes in Längsrichtung bedingt aber auch bei diesen Sägemühlen einen erhöhten Platzbedarf.

Aus der US 4104944 A ist es bekannt, einen stirnseitig eingespannten Baumstamm mit einem parallel zur Längsachse verfahrbaren Werkzeug zu zersägen. Die stirnseitige Einspannung behindert jedoch ein vollständiges Zersägen des Baumstammes zu Schnittholz, weil der stirnseitig eingespannte Teil des Baumstammes nicht zersägt werden kann.

US4262572 offenbart ein Verfahren nach dem Oberbegriff des Anspruchs 1 sowie eine Vorrichtung nach dem Oberbegriff des Anspruchs 4.

Der Erfindung liegt somit die Aufgabe zugrunde, ein Verfahren zum Bearbeiten von Baumstämmen so auszugestalten, dass eine gute Holzausnutzung in Verbindung mit einer genauen Bearbeitung mit vergleichsweise einfachen konstruktiven Mitteln und bei geringen Platzanforderungen gewährleistet werden können.

Ausgehend von einem Verfahren der eingangs geschilderten Art löst die Erfindung die gestellte Aufgabe dadurch, dass der Baumstamm durch eine Verlagerung wenigstens eines Stammendes quer zum Baumstamm gegenüber einer Längsachse ausgerichtet und in seiner Ausrichtlage koaxial zur Längsachse gespannt wird, bevor der gespannte Baumstamm unter Aufrechterhaltung der Einspannung mit Hilfe des entlang des Baumstammes verfahrbaren Werkzeuges zu einem Holzblock profiliert wird, wonach der Holzblock in der Spannlage für die Profilierung umgespannt und zu Schnittholz zersägt wird.

Durch die Ausrichtung des zu bearbeitenden Baumstammes gegenüber einer Längsachse, die für die nachfolgende Bearbeitung die wesentliche Bezugsachse darstellt, kann der Baumstamm nach dieser Ausrichtung bearbeitungsgerecht eingespannt und zu einem Holzblock profiliert werden. Da nicht der Baumstamm gegenüber den feststehenden Werkzeugen, sondern die Werkzeuge gegenüber dem eingespannten Baumstamm verfahren werden, wird der Platzbedarf im Wesentlichen durch die Länge der zu bearbeitenden Baumstämme bestimmt. Erst nach dem Profilieren des Baumstammes zu einem Holzblock als Ausgangswerkstück für die Fertigung von Schnittholz wird der Holzblock umgespannt, um ihn unbehindert zersägen zu können, und zwar beispielsweise mit Hilfe von Kreissägen, die wiederum entlang des ohne Lageveränderung umgespannten Holzblockes bewegt werden. Nach der Profilierung des Baumstammes zu einem Holzblock kann dabei bereits mit Hilfe der Kreissägen ein Teil des Schnittholzes vom Holzblock abgetrennt werden, bevor der Holzblock für das weitere Zersägen umgespannt wird.

Besonders einfache Konstruktionsverhältnisse ergeben sich in diesem Zusammenhang, wenn der gespannte Baumstamm vor seiner Profilierung achsparallel zur Längsachse verlagert wird, weil dann während des Zersägens des Holzblockes bereits ein neuer Baumstamm ausgerichtet und gespannt werden kann. Der Baumstamm braucht somit nach seiner Ausrichtung für seine vollständige Bearbeitung lediglich quer zu seiner Längsrichtung verlagert zu werden.

Da im Allgemeinen die für eine gute Holzausnutzung erforderliche Lage des Baumstammes gegenüber einer für die nachfolgende Bearbeitung maßgebenden Bezugsachse erst nach einer Vermessung des Baumstammes bestimmt werden kann, wird der Baumstamm nach einer Vermessung bezüglich der vorgegebenen Längsachse ausgerichtet und nach seinem Einspannen in eine vorbestimmte Bezugsdrehlage gedreht. Diese Bezugsdrehlage richtet sich nach der Anordnung der Bearbeitungswerkzeuge und stellt einen geringen Verschnitt sicher.

In diesem Zusammenhang ergeben sich besonders einfache Bearbeitungsverhältnisse, wenn der eingespannte Baumstamm bzw. der eingespannte Holzblock zwischen einzelnen auf eine Längsseite des Baumstammes bzw. des Holzblockes bezogenen Bearbeitungsschritten um 90° gedreht wird. Stehen zwei einander bezüglich des Baumstammes bzw. des Holzblockes gegenüberliegende Werkzeuge zur Verfügung, so wird der Baumstamm bzw. Holzblock zunächst auf zwei gegenüberliegenden Seiten und nach nur einer 90°-Drehung auf den beiden verbleibenden Längsseiten bearbeitet.

Zur Erreichung konstanter Verarbeitungsergebnisse wird die Profilierung des Baumstammes bzw. das Zersägen des profilierten Holzblockes nach einem aus abgespeicherten Bearbeitungsprogrammen in Abhängigkeit von einer Baumstammvermessung ausgewählten Bearbeitungsprogramm durchgeführt. Anhand der Vermessungsergebnisse des Baumstammes wird hierbei aus einer Reihe von hinterlegten Bearbeitungsprogrammen jenes Bearbeitungsprogramm ausgewählt, das für den zu bearbeitenden Baumstamm und die zu erzeugenden Schnitthölzer eine optimale Verarbeitung ermöglicht. Selbstverständlich können Parameter der hinterlegten Bearbeitungsprogramme auch an die Ergebnisse der Baumstammvermessung angepasst werden.

Die Erfindung betrifft außerdem eine Vorrichtung nach Anspruch 4 zur Durchführung des Verfahrens.

Die Spanneinrichtung wird achsparallel zur Längsachse zwischen der Ausrichteinrichtung und der Bearbeitungseinrichtung für die Herstellung eines Holzblockes verlagert. So kann der Durchsatz entsprechend vergrößert werden, weil während der Bearbeitung des Holzblockes ein neuer Baumstamm bereits ausgerichtet und gespannt werden kann.

Besonders vorteilhafte Konstruktionsverhältnisse ergeben sich, wenn die Spanneinrichtung zwei den Baumstamm zwischen Drehkronen haltende Pinolen aufweist, weil in diesem Fall der Baumstamm um die durch die Drehkronen bestimmte Längsachse in eine auf die Werkzeuge abgestellte Bearbeitungslage gedreht und festgehalten werden kann.

Damit die eingestellte Drehlage bei der Querverlagerung der Spanneinrichtung nicht verändert wird, können die Pinolen über eine Führung nach Art eines Gelenksparallelogramms achsparallel zur Längsachse verlagert werden. Eine solche Führung nach Art eines Gelenkparallelogramms bewirkt ja eine Verlagerung des Baumstammes parallel zu sich selbst, wie dies auch bei einer möglichen Linearführung der Fall ist.

Das stirnseitige Spannen des Baumstammes zu seiner Profilierung behindert das Zersägen des profilierten Holzblockes. Aus diesem Grunde wird der Holzblock ohne seine Verlagerung umgespannt. Zu diesem Zweck weist die Einrichtung zum Zersägen eine Spannhalterung mit an den profilierten Holzblock seitlich anstellbaren Anschlägen und zwischen den Anschlägen vorgesehenen, den Holzblock beispielsweise oben und unten umfassenden Spannbacken auf. Die den Holzblock umfassenden Spannbacken halten somit den Holzblock in Anlage an den Anschlägen fest, wobei der Holzblock von der den Anschlägen gegenüberliegenden Seite beginnend in Schnittholz, insbesondere Bretter, zersägt werden kann.

Anhand der Zeichnung wird das erfindungsgemäße Verfahren näher erläutert. Es zeigen
- Fig. 1: eine erfindungsgemäße Vorrichtung zur Durchführung des Verfahrens in einer vereinfachten Seitenansicht,
- Fig. 2: einen Schnitt nach der Linie II-II der Fig. 1 in einem größeren Maßstab,
- Fig. 3: eine der Fig. 1 entsprechende Darstellung der erfindungsgemäße Vorrichtung, jedoch mit einem Baumstamm in der Bearbeitungslage für die Profilierung,

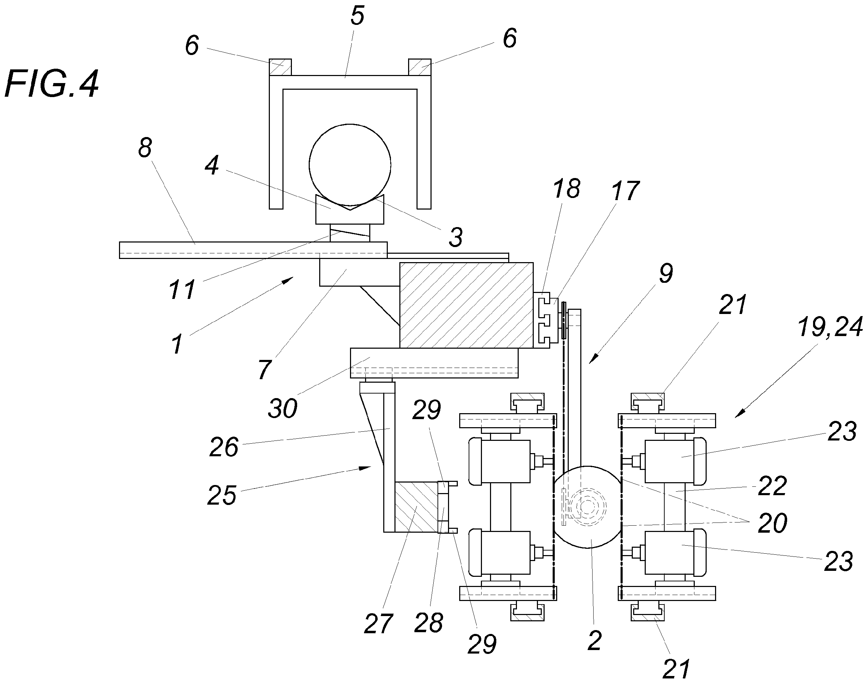

- Fig. 4: einen Schnitt nach der Linie IV-IV der Fig. 3 in einem größeren Maßstab,
- Fig. 5: die der Einrichtung zum Zersägen zugeordnete Spannhalterung für den profilierten Holzblock in einer Seitenansicht in einem größeren Maßstab und
- Fig. 6: diese Spannhalterung in einem Schnitt nach einer Linie VI-VI der Fig. 5.

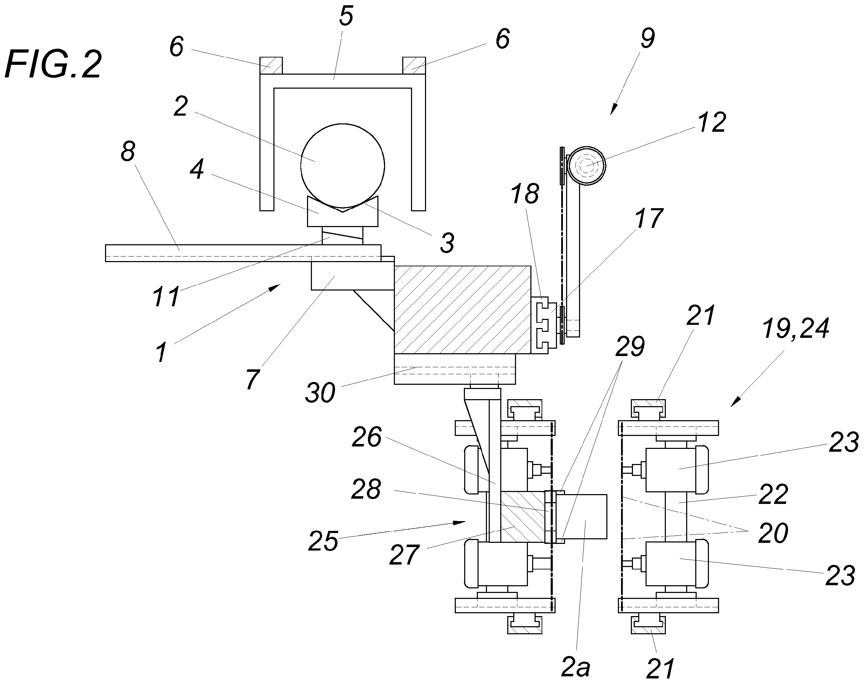

Die dargestellte Vorrichtung weist eine Einrichtung 1 zum Ausrichten eines Baumstammes 2 auf, der auf zwei mit einem gegenseitigen Abstand in Stammlängsrichtung angeordneten, mit einer V-förmigen Aufnahme 3 versehenen Stammauflagen 4 aufgelegt wird. Dieser Einrichtung 1 ist eine Messeinrichtung 5 zugeordnet, die entlang einer Führung 6 in Längsrichtung des Baumstammes 2 verfahrbar ist und den Stammquerschnitt erfasst. Der vermessene Baumstamm 2 kann dann mit Hilfe von entlang von Querführungen 7 verschiebbaren Transporteur bzw. Wagen 8 quer zur Stammlängsrichtung zu einer Spanneinrichtung 9 gefördert werden, um den Baumstamm 2 stirnseitig koaxial zu spannen. Da die Spanneinrichtung 9 eine Längsachse 10 als Bezugsachse für die Bearbeitung des Baumstammes 2 bestimmt, ist der Baumstamm 2 gegenüber dieser Längsachse 10 entsprechend dem Ergebnis der Vermessung auszurichten. Zu diesem Zweck ist eine der beiden Stammauflagen 4 in einer senkrecht zur Längsachse 10 verlaufenden Ebene verstellbar gelagert. Die eine Achse der Verstellung wird durch die Querführung 7 für den Wagen 8 gebildet, auf dem die betreffende Stammauflage 4 in der anderen Achse der Höhe nach verlagerbar ist. In der Fig. 2 ist hierfür ein Stelltrieb 11 in Form eines Keiltriebes angedeutet.

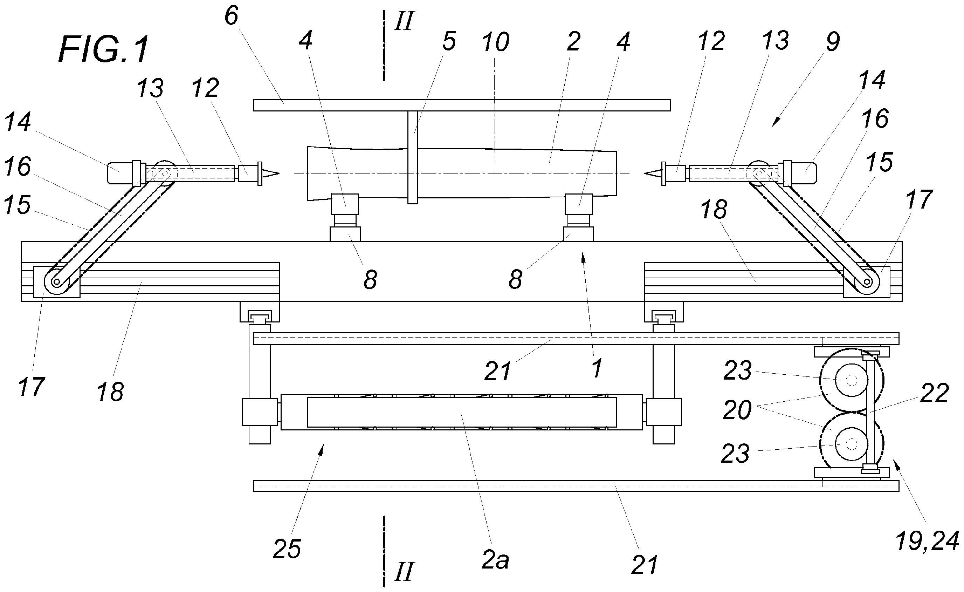

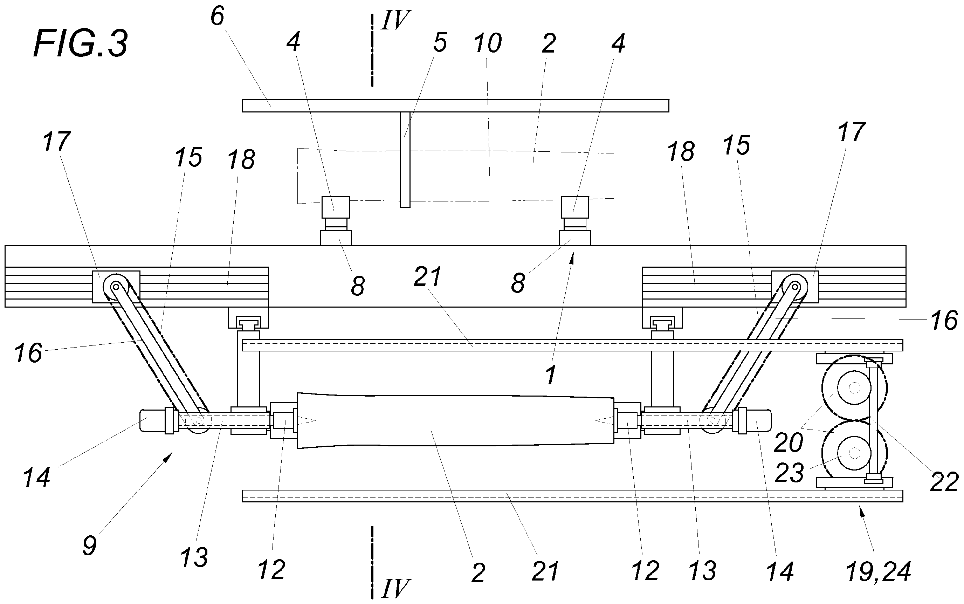

Die Spanneinrichtung 9 selbst kann vorteilhaft zwei den Baumstamm 2 zwischen Drehkronen 12 haltende Pinolen 13 aufweisen, wobei die Drehkronen 12 mit Drehantrieben 14 antriebsverbunden sind. Die Pinolen 12 sind senkrecht zur Längsachse 10 der Spanneinrichtung 9 über eine Führung 15 nach Art eines Gelenkparallelogramms gelagert, sodass die Pinolen 13 parallel zu sich selbst bewegt werden können. Im dargestellten Ausführungsbeispiel wird diese Führung nach Art eines Gelenkparallelogramms durch eine um Umlenkräder eines Führungshebels 16 geführte Kette gebildet, was jedoch nicht zwingend ist. Die Querverlagerung der Spanneinrichtung könnte beispielsweise auch mit Hilfe von Linearführungen sichergestellt werden. Die Anlenklager 17 der Führungshebel 16 sind entlang von Führungen 18 verstellbar angeordnet, sodass durch eine gegensinnige Verlagerung der Anlenklager entlang der Führungen 18 die Pinolen 13 und damit der zwischen den Drehkronen 12 eingespannte Baumstamm 2 achsparallel zur Längsachse 10 zwischen der in der Fig. 1 eingezeichneten, angehobenen Einspannlage in eine Bearbeitungslage nach der Fig. 3 verschoben werden kann. Mit Hilfe der Drehantriebe 14 kann der Baumstamm 2 vor seinem Profilieren noch in eine sich aufgrund seiner Vermessung ergebende Drehlage gedreht werden, in der eine vorteilhafte Holzausnutzung gewährleistet ist.

Die Bearbeitungseinrichtung 19, mit deren Hilfe der vermessene Baumstamm 2 zu einem Holzblock 2a als Ausgangswerkstück für das Zersägen zu Schnittholz, insbesondere zu Brettern, profiliert wird, weist vorzugsweise zwei einander bezüglich des Baumstammes 2 gegenüberliegende Werkzeuge 20 auf, die in einem entlang einer Längsführung 21 verfahrbaren Schlitten 22 gelagert sind und mit ihren Antriebsmotoren 23 senkrecht zur Bearbeitungsebene an den Baumstamm 2 angestellt werden können. Mit dem Verfahren der Schlitten 22 der einander gegenüberliegenden Bearbeitungswerkzeuge 20 wird der Baumstamm 2 auf einander gegenüberliegenden Längsseiten in einem oder mehreren Arbeitsgängen profiliert. Zum Profilieren der verbleibenden Längsseiten braucht demnach der Baumstamm 2 lediglich mit Hilfe der Drehantriebe 14 für die Drehkronen 12 um 90° gedreht zu werden, um die verbleibenden Baumstammseiten zum Holzblock 2a zu profilieren.

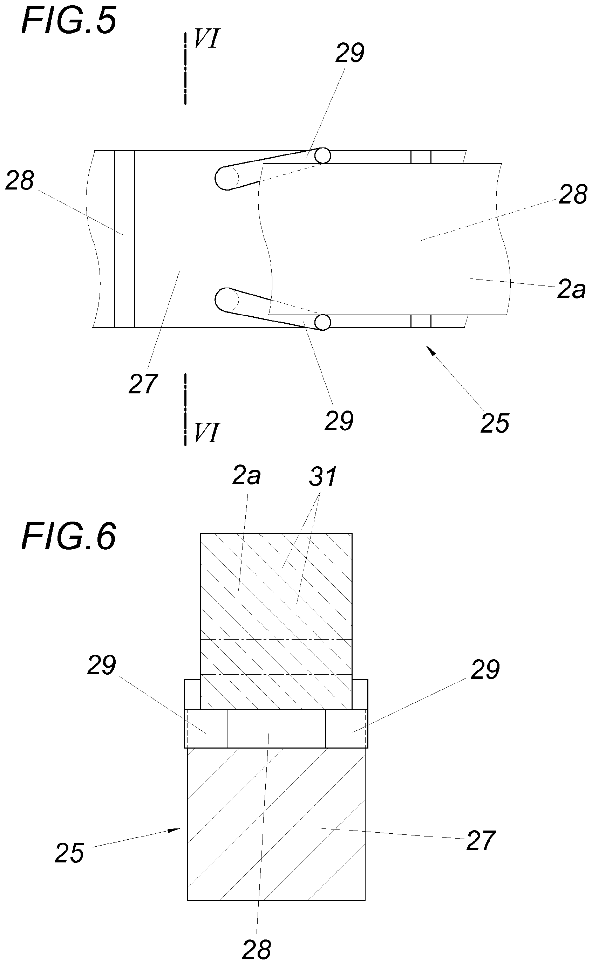

Der Holzblock 2a wird anschließend mit Hilfe einer Sägeeinrichtung 24 zu Schnittholz zersägt. Da gemäß dem Ausführungsbeispiel die Bearbeitungswerkzeuge 20 als Kreissägeblätter ausgebildet sind, sind diese Werkzeuge auch zum Zersägen des Holzblockes 2a zu Schnittholz geeignet, sodass sich eine gesonderte Sägeeinrichtung 24 erübrigt. Es muss allerdings der Holzblock 2a umgespannt werden, um eine unbehinderte Schnittführung für das Sägen des Holzblockes 2a zu ermöglichen. Hierfür ist eine Spannhalterung 25 vorgesehen, die auf einem entlang von Führungssäulen 26 der Höhe nach verstellbaren Träger 27 einerseits Anschläge 28 zur seitlichen Anlage am Holzblock 2a und andererseits Spannbacken 29 aufweist, die den profilierten Holzblock 2a oben und unten umfassen und in Anlage an den Anschlägen 28 festhalten. Die Anordnung der Anschläge 28 und der Spannbacken 29 kann insbesondere den Fig. 5 und 6 entnommen werden. Zum Anlegen der entlang der Führungssäulen 26 gegenüber dem Holzblock 2a ausgerichteten Anschlägen 28 an die Längsseite des Holzblocks 2a können die Führungssäulen 26 zusätzlich entlang von querverlaufenden Führungsschienen 30 verlagert werden. Die Querverlagerung der Spannhalterung 25 ist auch erforderlich, um den Baumstamm 2 unbehindert durch diese Spannhalterung 25 profilieren zu können. Der Holzblock 2a kann nach der Übernahme durch die Spannhalterung 25 durch die Spanneinrichtung 9 freigegeben werden, sodass diese Spanneinrichtung 9 aus der Bearbeitungslage nach der Fig. 3 in die Einspannlage nach der Fig. 1 zurückgestellt werden kann, um einen neuen Baumstamm zu übernehmen. Der durch die Spannhalterung 25 umgespannte Holzblock 2a kann dann unbehindert durch die Spanneinrichtung 9 durch die Sägeeinrichtung 24 beispielsweise zu Brettern zersägt werden, wie dies in der Fig. 6 durch die Schnittflächen 31 angedeutet ist.

## Patentansprüche

1. Verfahren zum Bearbeiten eines Baumstammes (2), der nach einem Ausrichten bezüglich einer Längsachse (10) mit Hilfe wenigstens eines Werkzeugs (20) zu einem Holzblock (2a) profiliert und anschließend zu Schnittholz zersägt wird, wobei der Baumstamm (2) durch eine Verlagerung wenigstens eines Stammendes quer zum Baumstamm (2) gegenüber einer Längsachse (10) ausgerichtet und in seiner Ausrichtlage gespannt wird, bevor der gespannte Baumstamm (2) zu einem Holzblock (2a) profiliert wird, wobei der Baumstamm (2) mit Hilfe eines entlang des Baumstammes (2) verfahrbaren Werkzeuges (20) zu einem Holzblock (2a) profiliert wird, **dadurch gekennzeichnet, dass** der Baumstamm (2) in seiner Ausrichtlage koaxial zur Längsachse (10) gespannt wird und unter Aufrechterhaltung der Einspannung zu einem Holzblock (2a) profiliert wird und dass nach der Profilierung der Holzblock (2a) in der Spannlage für die Profilierung umgespannt und zu Schnittholz zersägt wird, wobei der Baumstamm (2) nach einer Vermessung bezüglich der vorgegebenen Längsachse (10) ausgerichtet, nach seinem Einspannen in eine vorbestimmte Bezugsdrehlage gedreht und die Profilierung des Baumstammes (2) zu einem Holzblock (2a) und/oder das Zersägen des Holzblockes (2a) nach einem aus abgespeicherten Bearbeitungsprogrammen in Abhängigkeit von einer Baumstammvermessung ausgewählten Bearbeitungsprogramm durchgeführt wird.

2. Verfahren nach Anspruch 1, **dadurch gekennzeichnet, dass** der gespannte Baumstamm (2) vor seiner Profilierung achsparallel zur Längsachse (10) verlagert wird.

3. Verfahren nach Anspruch 1 oder 2, **dadurch gekennzeichnet, dass** der eingespannte Baumstamm (2) bzw. der eingespannte Holzblock (2a) zwischen einzelnen auf eine Längsseite des Baumstammes (2) bzw. des Holzblockes (2a) bezogenen Bearbeitungsschritten um 90° gedreht wird.

4. Vorrichtung zur Durchführung eines Verfahrens zum Bearbeiten eines Baumstammes (2) mit einer Einrichtung (1) zum Ausrichten des Baumstammes (2) bezüglich einer Längsachse (10), mit einer Bearbeitungseinrichtung (19) zum Profilieren des Baumstammes (2) zu einem Holzblock (2a) und mit einer Einrichtung (24) zum Zersägen des Holzblockes (2a) in Schnittholz, wobei die Einrichtung (1) zum Ausrichten des Baumstammes (2) zwei mit einem gegenseitigen Abstand in Stammlängsrichtung angeordnete Stammauflagen (4), von denen wenigstens eine in einer quer zur Stammlängsachse (10) verlaufenden Ebene verstellbar gelagert ist, sowie eine den ausgerichteten Baumstamm (2) stirnseitig fassende Spanneinrichtung (9) aufweist, und wobei die Bearbeitungseinrichtung (19) wenigstens ein parallel zur Längsachse (10) verfahrbares Werkzeug (20) umfasst, wobei die Einrichtung (24) zum Zersägen eine Spannhalterung (25) mit an den profilierten Holzblock (2a) seitlich anstellbaren Anschlägen (28) und zwischen den Anschlägen (28) vorgesehenen, den Holzblock (2a) umfassenden Spannbacken (29) aufweist, **dadurch gekennzeichnet, dass** die Vorrichtung zur Durchführung des Verfahrens nach einem der vorangegangenen Ansprüche vorgesehen ist, dass der Einrichtung (1) eine Messeinrichtung (5) zugeordnet ist, die entlang einer Führung (6) in Längsrichtung des Baumstammes (2) verfahrbar ist und den Stammquerschnitt erfasst und dass die Spanneinrichtung (9) achsparallel zur Längsachse (10) zwischen der Ausrichteinrichtung (1) und der Bearbeitungseinrichtung (19) verlagerbar ist.

5. Vorrichtung nach Anspruch 6 oder 7, **dadurch gekennzeichnet, dass** die Spanneinrichtung zwei den Baumstamm (2) zwischen Drehkronen (12) haltende Pinolen (13) aufweist.

6. Vorrichtung nach Anspruch 8, **dadurch gekennzeichnet, dass** die Pinolen (13) über eine Führung nach Art eines Gelenksparallelogramms achsparallel zur Längsachse (10) verlagerbar sind.

## Claims

1. Method for processing a tree trunk (2) which, after orientation with respect to a longitudinal axis (1), is profiled with the aid of at least one tool (20) to form a wood block (2a) and is then sawn to form sawn timber, wherein the tree trunk (2) is orientated by a displacement of at least one trunk end transversely to the tree trunk (2) with respect to a longitudinal axis (10) and is clamped in its orientated position before the clamped tree trunk (2) is profiled to form a wood block (2a), wherein the tree trunk (2) is profiled to form a wood block (2a) with the aid of a tool (20) which can travel along the tree trunk (2), **characterised in that** the tree trunk (2) is clamped in its orientated position coaxially to the longitudinal axis (10) and, while the clamping-in is maintained, is profiled to form a wood block (2a), and that, after profiling, the wood block (2a) is clasped in the clamped position for profiling and is sawn to form sawn timber, wherein, after measurement, the tree trunk (2) is orientated with respect to the specified longitudinal axis (10), is rotated, after being clamped-in, into a predetermined reference rotational position, and the profiling of the tree trunk (2) to form a wood block (2a) and/or the sawing of the wood block (2a) is carried out according to a processing program selected from stored processing programs in dependence upon a tree trunk measurement.

2. Method as claimed in claim 1, **characterised in that** the clamped tree trunk (2) is displaced axially in parallel with the longitudinal axis (10) prior to being profiled.

3. Method as claimed in claim 1 or 2, **characterised in that** the clamped-in tree trunk (2) or the clamped-in wood block (2a) is rotated by 90° between individual processing steps in relation to a long side of the tree trunk (2) or of the wood block (2a).

4. Apparatus for carrying out a method for processing a tree trunk (2) having a device (1) for orientating the tree trunk (2) with respect to a longitudinal axis (10), having a processing device (19) for profiling the tree trunk (2) to form a wood block (2a) and having a device (24) for sawing the wood block (2a) into sawn timber, wherein the device (1) for orientating the tree trunk (2) comprises two trunk supports (4), which are disposed with mutual spacing in the longitudinal direction of the trunk and at least one of which is mounted so as to be displaceable in a plane extending transversely to the longitudinal axis (10) of the trunk, and comprises a clamping device (9) grasping the end face of the orientated tree trunk (2) and wherein the processing device (19) comprises at least one tool (20) which can travel parallel to the longitudinal axis (10), wherein the device (24) for sawing comprises a clamping holder (25) with stops (28), which can be placed laterally against the profiled wood block (2a), and clamping jaws (29) provided between the stops (28) and grasping the wood block (2a), **characterised in that** the apparatus is provided for carrying out the method as claimed in any one of the preceding claims, that the device (1) is allocated a measuring device (5) which can travel along a guide (6) in the longitudinal direction of the tree trunk (2) and clasps the trunk cross-section and that the clamping device (9) can be displaced axially in parallel with the longitudinal axis (10) between the orientation device (1) and the processing device (19).

5. Apparatus as claimed in claim 6 or 7 [*sic*], **characterised in that** the clamping device comprises two mandrels (13) holding the tree trunk (2) between rotating crowns (12).

6. Apparatus as claimed in claim 8 [*sic*], **characterised in that** the mandrels (13) can be displaced axially in parallel with the longitudinal axis (10) via an articulated parallelogram-type guide.

## Revendications

1. Procédé servant à usiner un tronc d'arbre (2), qui est profilé, après une orientation par rapport à un axe longitudinal (10), à l'aide d'au moins un outil (20) pour obtenir un bloc de bois (2a) et qui est, après, scié pour obtenir du bois débité, dans lequel le tronc d'arbre (2) est orienté par rapport à un axe longitudinal (10) par un déplacement d'au moins une extrémité de tronc de manière transversale par rapport au tronc d'arbre (2) et est serré dans sa position d'orientation avant que le tronc d'arbre (2) serré ne soit profilé pour obtenir un bloc de bois (2a), dans lequel le tronc d'arbre (2) est profilé à l'aide d'un outil (20) pouvant être déplacé le long du tronc d'arbre (2) pour obtenir un bloc de bois (2a), **caractérisé en ce que** le tronc d'arbre (2) est serré dans sa position d'orientation coaxialement à l'axe longitudinal (10) et est profilé en maintenant le serrage pour obtenir un bloc de bois (2a) et **en ce qu'**après le profilage, le bloc de bois (2a) est remanié dans la position de serrage pour le profilage et est scié pour obtenir du bois débité, le tronc d'arbre (2) étant orienté après un mesurage par rapport à l'axe longitudinal (10) prédéfini, tourné après son serrage dans une position de rotation de référence prédéfinie et le profilage du tronc d'arbre (2) pour obtenir un bloc de bois (2a) et/ou le sciage du bloc de bois (2a) étant réalisé d'après un programme d'usinage sélectionné à partir de programmes d'usinage enregistrés, en fonction d'un mesurage de tronc d'arbre.

2. Procédé selon la revendication 1, **caractérisé en ce que** tronc d'arbre (2) serré est déplacé avant son profilage de manière parallèle à l'axe par rapport à l'axe longitudinal (10).

3. Procédé selon la revendication 1 ou 2, **caractérisé en ce que** le tronc d'arbre (2) serré ou le bloc de bois (2a) serré est tourné de 90° entre les étapes d'usinage individuelles, en référence à un coté longitudinal du tronc d'arbre (2) ou du bloc de bois (2a).

4. Dispositif pour réaliser un procédé servant à usiner un tronc d'arbre (2), avec un dispositif (1) destiné à orienter le tronc d'arbre (2) par rapport à un axe longitudinal (10), avec un dispositif d'usinage (19) pour le profilage du tronc d'arbre (2) pour obtenir un bloc de bois (2a) et avec un dispositif (24) pour scier le bloc de bois (2a) pour obtenir du bois débité, le dispositif (1) pour orienter le tronc d'arbre (2) comportant deux tables à grume (4) disposées à une distance mutuelle dans le sens longitudinal du tronc, dont au moins l'une est placée réglable à un niveau transversal par rapport à l'axe longitudinal du tronc (10), ainsi qu'un dispositif de serrage (9) prenant de manière frontale le tronc d'arbre (2) orienté, et, dans lequel le dispositif d'usinage (19) comprend au moins un outil (20) pouvant être déplacé parallèlement à l'axe longitudinal (10), dans lequel le dispositif (24) pour scier comporte un dispositif de serrage (25) avec des butées (28) réglables latéralement au niveau du bloc de bois (2a) profilé et des mâchoires de serrage (29) comprenant le bloc de bois (2a) prévues entre les butées (28), **caractérisé en ce que** le dispositif est prévu pour réaliser le procédé selon l'une des précédentes revendications, **en ce qu'**un dispositif de mesure (5) est associé au dispositif (1) qui peut être déplacé le long d'un guide (6) dans le sens longitudinal du tronc d'arbre (2) et saisit la section transversale du tronc, et **en ce que** le dispositif de serrage (9) peut être déplacé de manière parallèle à l'axe par rapport à l'axe longitudinal (10) entre le dispositif d'orientation (1) et le dispositif d'usinage (19).

5. Dispositif selon la revendication 6 ou 7, **caractérisé en ce que** le dispositif de serrage comporte deux fourreaux (13) maintenant le tronc d'arbre (2) entre des cônes rotatifs (12).

6. Dispositif selon la revendication 8, **caractérisé en ce que** les fourreaux (13) peuvent être déplacés de manière parallèle à l'axe par rapport à l'axe longitudinal (10) par le biais d'un guide à la façon d'un parallélogramme articulé.
